# EUROPÄISCHE PATENTSCHRIFT

(11) **EP 2 533 935 B1**
(45) Veröffentlichungstag und Bekanntmachung des Hinweises auf die Patenterteilung: **09.07.2014**
(21) Anmeldenummer: 11703179.9
(22) Anmeldetag: 02.02.2011
(51) Int. Cl.: B23K 26/24, B23K 26/26, B23K 31/02, B23K 26/06, B21C 37/02

(54) **VORRICHTUNG UND VERFAHREN ZUM KONTINUIERLICHEN VERSCHWEISSEN VON BÄNDERN UND/ ODER BLECHEN UNTER VERWENDUNG ZWEIER ZUEINANDER VERSETZTER SCHWEISSKÖPFE**
DEVICE AND METHOD FOR CONTINUOUSLY WELDING STRIPS AND/OR SHEETS USING TWO WELDING HEADS OFFSET FROM EACH OTHER
DISPOSITIF ET PROCÉDÉ DE SOUDAGE EN CONTINU DE BANDES ET/OU DE TÔLES AU MOYEN DE DEUX TÊTES DE SOUDAGE DÉCALÉES L'UNE PAR RAPPORT À L'AUTRE

(30) Priorität: 10.02.2010 DE 102010007573
(43) Veröffentlichungstag der Anmeldung: 19.12.2012
(73) Patentinhaber: WISCO Lasertechnik GmbH, 88212 Ravensburg (DE)
(72) Erfinder: ALBER, Gerhard, 88276 Berg (DE)
(74) Vertreter: Otten, Roth, Dobler & Partner
(86) Internationale Anmeldenummer: PCT/EP2011/051426
(87) Internationale Veröffentlichungsnummer: WO 2011/098377

(56) Entgegenhaltungen:
- EP-A1- 0 211 970
- DE-A1- 3 723 611
- DE-A1- 4 216 643
- DE-C1- 10 007 496
- JP-A- 7 144 288
- US-A- 4 321 453

## Beschreibung

Die Erfindung betrifft eine Vorrichtung und ein Verfahren zum kontinuierlichen Verschweißen von auf Stoß geführten Bändern bzw. Blechen an deren Stoßkanten mittels mindestens zweier Schweißköpfe gemäß dem Oberbegriff der Ansprüche 1 und 7.

Eine derartige Vorrichtung ist aus der DE 37 23 611 C2 bekannt. Die Vorrichtung arbeitet mit mindestens einem Laserstrahl. Ihre Spannrollen bestehen aus Hohlachsen und darauf gelagerten und mit axialem Abstand voneinander angeordneten Rollenmänteln, wobei jeder Laserstrahl-Schweißkopf im Inneren der Hohlachse mindestens einer Spannrolle angeordnet ist. Der Spalt zwischen den Rollenmänteln und eine Öffnung in der Hohlachse dienen dabei als Durchgang für den Laserstrahl. In der DE 37 23 611 C2 ist angegeben, dass es in der Regel ausreichend ist, wenn ein einziger Schweißkopf in einer der beiden sich gegenüberliegenden Spannrollen vorgesehen ist. In Bezug auf das Verschweißen besonders dicker Bleche oder Bänder wird dort aber im Hinblick auf die dafür erforderliche Energie zudem als zweckmäßige Ausgestaltung vorgeschlagen, jeweils mindestens einen Schweißkopf in den auf beiden Seiten der Bänder bzw. Bleche angeordneten Spannrollen vorzusehen und/oder mehrere Schweißköpfe in einer auf einer Bandseite angeordneten Spannrolle in Bandlaufrichtung versetzt zueinander anzuordnen.

Des Weiteren ist in der DE 101 31 883 B4 ein Verfahren zum Verschweißen von Metallbauteilen beschrieben, bei welchem die Metallbauteile im Schweißnahtbereich von beiden Seiten mit Hilfe mindestens jeweils eines Schweißstrahls, insbesondere Laserstrahls im Wärmeleitungsmodus über im Wesentlichen den gesamten Schweißnahtquerschnitt aufgeschmolzen werden, wobei eine Relativbewegung zwischen den Metallbauteilen und dem Schweißstrahl erfolgt, und wobei die Schmelzbadbereiche der auf gegenüberliegenden Seiten der Metallbauteile einwirkenden Schweißstrahlen mit Hilfe einer entsprechenden relativen Anordnung der Positionen der Schweißstrahlen in Schweißnahtrichtung zumindest teilweise überlappend erzeugt werden.

Beim Verschweißen von beschichteten, eine Dicke im Bereich von 0,6 mm bis 3,0 mm aufweisenden Karosserieblechen mittels eines auf die Oberseite der Bleche einwirkenden Laserstrahls entsteht insbesondere auf der dem Laserschweißkopf abgewandten Blechseite erheblicher Schmutzanfall. Die Schmutzpartikel werden mit hoher Dynamik nach unten abgestrahlt. In existierenden Schweißanlagen gemäß der DE 37 23 611 C2 wird dieser Schmutz durch wassergekühlte Strahlfallen bzw. Absaugeinrichtungen aufgefangen. Dies gelingt jedoch in der Praxis nicht vollständig, so dass von Zeit zu Zeit eine manuelle Reinigung zur Entfernung des angesammelten Schmutzes erforderlich ist.

Ein weiteres Problem beim kontinuierlichen Verschweißen von Blechen in einer Anlage gemäß der DE 37 23 611 C2 besteht darin, dass die zu verschweißenden Bleche spaltbehaftet sind. Die Spaltbreite beträgt beispielsweise bis ca. 0,2 mm. Der Spalt ist zwar sehr schmal, dennoch kann ein relativ großer Anteil der Laserstrahlung beim Schweißen durch den Spalt hindurch treten. Ein gegenüberliegender zweiter Schweißkopf wäre somit beim Schweißen einem ständigen Laserstrahlbeschuss ausgesetzt und müsste deshalb in geeigneter Weise geschützt werden. Dieses Problem wird noch durch den Umstand verschärft, dass in einer Produktionsanlage aufgrund von Reaktionszeiten in der Steuerung sowie Toleranzen im Blech und in der Schweißmaschine kein exaktes Ein- bzw. Ausschalten der Laserstrahlung am Anfang und am Ende des Bleches möglich ist. Dies bedeutet, dass gegebenenfalls jeweils am Anfang und am Ende des Schweißvorganges die volle Laserleistung an den zu verschweißenden Blechen vorbei nach unten schießt. Eine gegenüberliegende Anordnung von zwei Schweißpunkten bzw. Laserschweißköpfen ist daher bei einer kontinuierlich schweißenden Anlage gemäß der DE 37 23 611 C2 technisch kaum realisierbar.

Des Weiteren ist aus der EP 0 211 970 A1 eine Vorrichtung zum Laserstrahlschweißen von stumpf gegeneinander stoßenden Kanten eines zu einem Dosenmantel gebogenen rechteckigen Blechzuschnittes bekannt. Die Dosenmäntel gleiten während des Schweißens über innenliegende Führungsleisten und werden von seitlich angeordneten, als Andrückvorrichtung wirkenden Blechen und einer unten angeordneten Druckrolle vorgespannt, so dass die Schnittkanten gegeneinander gepresst werden und ohne Luftspalt durch die Schweißstation bewegt werden. Um im Schweißpunkt Kantenversatz zu vermeiden, werden die Dosenmäntel an den Schnittkanten durch eine Doppelrolle auf die Führungsleiste gedrückt. Ein außenseitiger Laserstrahl strahlt in die Mitte zwischen die Doppelrolle, während ein innenseitiger Laserstrahl versetzt zur Außenschweißung durch ein in der Führungsleiste ausgebildetes Fenster strahlt.

Aus der JP 7-144288 A ist schließlich ein Verfahren zum Herstellen von längsnahtgeschweißten Rohren bekannt, bei dem durch zwei nacheinander angeordnete Laserstrahlen das Verschweißen mit unterschiedlichen Schmelzbadeindringtiefen stufenweise durchgeführt werden kann. Die Laserstrahlen treffen dabei jeweils außenseitig auf die Fügenaht des herzustellenden Rohres.

Der vorliegenden Erfindung liegt die Aufgabe zugrunde, eine Vorrichtung bzw. ein Verfahren zum kontinuierlichen Verschweißen von auf Stoß geführten Bändern anzugeben, die auch bei dünnen Bändern bzw. Blechen die Herstellung einer gleichmäßigen und relativ glatten Schweißnaht ermöglichen, und dies mit deutlich höherer Schweißgeschwindigkeit als es herkömmliche Schweißanlagen dieser Art können.

Diese Aufgabe wird erfindungsgemäß durch eine Vorrichtung mit den Merkmalen des Anspruchs 1 bzw. ein Verfahren mit den Merkmalen des Anspruchs 7 gelöst.

Die erfindungsgemäße Vorrichtung weist mindestens zwei Schweißköpfe auf, die beidseits der zu verschweißenden Bänder bzw. Bleche und in Laufrichtung der Bänder bzw. Bleche versetzt zueinander angeordnet sind, so dass die Auftreffstellen der Schweißstrahlen (Energiestrahlen) auf die zu verschweißenden Band- bzw. Längskanten voneinander mindestens um das Maß des halben Außendurchmessers der dem ersten Energiestrahl zugewandten Spannrolle beabstandet sind, wobei der erste der mindestens zwei Schweißköpfe in einer der auf beiden Seiten der Bänder bzw. Bleche angeordneten Spannrollen vorgesehen ist, und wobei der zweite der mindestens zwei Schweißköpfe in einer in Laufrichtung der Bänder bzw. Bleche nachfolgenden Spannrolle vorgesehen ist.

Der Abstand der beidseitigen Schweißstellen ist somit so groß bemessen, dass der zweite der mindestens zwei Schweißköpfe weder in der den ersten Schweißkopf umgebenden Spannrolle noch in der derselben gegenüberliegenden Spannrolle angeordnet ist.

Dementsprechend ist das erfindungsgemäße Verfahren dadurch gekennzeichnet, dass die mindestens zwei Schweißköpfe in Laufrichtung der Bänder bzw. Bleche versetzt zueinander angeordnet werden, so dass die Auftreffstellen der Energiestrahlen auf die zu verschweißenden Band- bzw. Längskanten voneinander mindestens um das Maß des halben Außendurchmessers der dem ersten Energiestrahl zugewandten Spannrolle beabstandet sind, und dass die Energiestrahlleistungen der mindestens zwei Schweißköpfe so eingestellt werden, dass sich die durch den jeweiligen Energiestrahl erzeugte Schmelzbadeindringtiefe nicht über eine Teildicke der zu verschweißenden Bänder bzw. Bleche oder, bei Bändern bzw. Blechen mit unterschiedlichen Dicken, nicht über eine Teildicke des dünneren der zu verschweißenden Bänder bzw. Bleche hinaus erstreckt, wobei der erste der mindestens zwei Schweißköpfe in einer der auf beiden Seiten der Bänder bzw. Bleche angeordneten Spannrollen vorgesehen ist, und wobei der zweite der mindestens zwei Schweißköpfe in einer in Laufrichtung der Bänder bzw. Bleche nachfolgenden Spannrolle vorgesehen ist.

Die erfindungsgemäße Vorrichtung und das entsprechende sequentielle Schweißverfahren ermöglichen ein kontinuierliches Verschweißen von auf Stoß geführten Bändern bzw. Blechen an den Stoßkanten mit hoher Schweißgeschwindigkeit. Dabei lassen sich selbst bei dünnen Bändern bzw. Blechen gleichmäßige und relativ glatte Schweißnähte realisieren. Bei entsprechenden Schweißversuchen an Stahlblechen, die eine Dicke von ca. 0,8 mm bzw. 1,5 mm aufwiesen, konnten mit identischen Laserstrahlleistungen Schweißgeschwindigkeiten gegenüber dem konventionellen einseitigen Verfahren gesteigert, sogar nahezu verdoppelt werden und Geschwindigkeiten größer 15 m/min erzielt werden. Die so hergestellten Schweißnähte hatten eine gleichmäßige und glatte Oberfläche.

Ein weiterer Vorteil der erfindungsgemäßen Anordnung der Schweißstellen in einem Abstand, der mindestens dem Maß des halben Außendurchmessers der dem ersten Energiestrahl zugewandten Spannrolle entspricht, ist, dass durch diese räumliche Trennung praktisch zwei von einander getrennte Schweißprozesse stattfinden und nicht eine Überlagerung von zwei Prozessen in einem Punkt (Bereich). Hierdurch wird das Einstellen bzw. Optimieren der Prozessparameter wesentlich erleichtert.

Eine weitere Ausgestaltung der erfindungsgemäßen Vorrichtung sieht vor, dass deren Schweißköpfe so angeordnet sind, dass die Auftreffstellen ihrer Energiestrahlen auf die zu verschweißenden Band- bzw. Längskanten um einen Betrag im Bereich von 15 cm bis 200 cm, vorzugsweise im Bereich von 50 cm bis 120 cm voneinander beabstandet sind.

Eine weitere vorteilhafte Ausgestaltung der erfindungsgemäßen Vorrichtung ist dadurch gekennzeichnet, dass die an der Unterseite der Bänder bzw. Bleche angreifende Spannrolle beispielsweise als Speichenradkonstruktion ausgeführt ist und mit axialem Abstand voneinander angeordnete Rollenmäntel aufweist. Beim Schweißen von Tailored Blanks bzw. entsprechender Bänder aus Metallbändern mit unterschiedlicher Werkstoffeigenschaft und/oder Dicke ist eine sehr hohe Genauigkeit hinsichtlich des so genannten vertikalen Kantenversatzes erwünscht. Beim kontinuierlichen Schweißen in einer Anlage gemäß der DE 37 23 611 C2 unterliegt insbesondere die untere Spannrolle (Basisrolle) einer erheblichen Wärmebelastung. Durch die Ausführung der Spannrolle in Form eines Speichenrades wird die Formstabilität der Spannrolle wesentlich verbessert, so dass die Wärmebelastung nicht zu einem Verziehen der Spannrolle und daraus resultierenden Toleranzen bezüglich des Kantenversatzes führt. Andere Ausführungsformen der Spannrollen sind ebenfalls denkbar.

Eine weitere vorteilhafte Ausgestaltung der erfindungsgemäßen Vorrichtung sieht vor, dass benachbart zu den Spannrollen Rollenträger mit Antriebsrollen zur Förderung der zu verschweißenden Bänder bzw. Bleche angeordnet sind. Diese Ausgestaltung ermöglicht eine sehr exakte Steuerung des Vorschubes der Bänder bzw. Bleche relativ zu den Schweißköpfen. In diesem Zusammenhang sieht die Erfindung ferner vor, dass die Rollenträger beweglich gelagert und mit mindestens einem Antrieb versehen sind, mittels dem die Rollenträger parallel z-u den Drehachsen der Spannrollen verfahrbar sind. Hierdurch wird die Möglichkeit einer Justierung der Lage der zu verschweißenden Band- bzw. Längskanten relativ zu den Spannrollen bzw. der Energiestrahlachse geschaffen. Die Justierung kann durch eine entsprechende Steuerung des dem verfahrbaren Rollenträger zugeordneten Antriebes erfolgen. Eine vorteilhafte Weiterbildung dieser Ausgestaltung sieht einen an einer Steuerung angeschlossenen Sensor zur Erfassung der Lage der zu verschweißenden Band- bzw. Längskanten vor, wobei die Steuerung in Abhängigkeit der von dem Sensor erfassten Lage der Band- bzw. Längskanten den Antrieb der Rollenträger steuert. Hierdurch wird eine automatische Justierung der Lage der zu verschweißenden Band- bzw. Längskanten relativ zu der Energiestrahlachse realisiert.

Alternativ können zur Förderung der zu verschweißenden Bänder bzw. Bleche auch Ketten mit beispielsweise Mitnehmerstiften verwendet werden. Des Weiteren können in der erfindungsgemäßen Vorrichtung auch Förderer verwendet werden, die mittels Klemm- bzw. Spannmitteln die zu verschweißenden Bänder bzw. Bleche zu den Auftreffstellen der Energiestrahlen transportieren.

Bezüglich des erfindungsgemäßen Schweißverfahrens besteht eine vorteilhafte Ausgestaltung ferner darin, dass die mindestens zwei Schweißköpfe in Abhängigkeit des Werkstoffes, der Dicke und/oder der Vorschubgeschwindigkeit der zu verschweißenden Bänder bzw. Bleche mit unterschiedlicher Energiestrahlleistung betrieben werden, so dass sich an den beiden Seiten der zu verschweißenden Bänder bzw. Bleche unterschiedliche Eindringtiefen der Schmelzbadbereiche ergeben. Die Energiestrahlleistungen bzw. Eindringtiefen der Schmelzbadbereiche können so gewählt werden, dass beispielsweise beim Verschweißen von beschichteten Metallblechen ein Abstrahlen von Schweißpartikeln (Schmutzpartikeln) weitestgehend unterdrückt wird. Vor allem können dabei die Energiestrahlleistungen bzw. Eindringtiefen der Schmelzbadbereiche so gewählt werden, dass mit dem ersten der mindestens zwei Energiestrahlen (Laserstrahlen) bereits eine ausreichend feste Schweißverbindung erzeugt wird, die nachfolgend einen unerwünschten vertikalen Kantenversatz verhindert.

In diesem Zusammenhang sieht das erfindungsgemäße Verfahren insbesondere vor, dass mit dem ersten Schweißkopf und dem mindestens einen zweiten Schweißkopf Schmelzbadeindringtiefen erzeugt werden, die um mindestens 10%, vorzugsweise mindestens 20% überlappen, wobei vorzugsweise an beiden Auftreffstellen der Energiestrahlen die gleiche Energie eingetragen wird. Je nach Dicke und/oder Werkstoffgüte der zu verschweißenden Bänder bzw. Bleche kann durch diese Ausgestaltung des erfindungsgemäßen Verfahrens die Schweißgeschwindigkeit nahezu verdoppelt werden.

Nachfolgend wird die Erfindung anhand einer mehrere Ausführungsbeispiele darstellenden Zeichnung näher erläutert. Es zeigen in schematischer Darstellung:
- Fig. 1: eine erfindungsgemäße Schweißvorrichtung mit einer ersten Spannrollenstation und einer in Bandlaufrichtung nachfolgenden zweiten Spannrollenstation, in Seitenansicht;
- Fig. 2: die erste Spannrollenstation der Schweißvorrichtung der Fig. 1, in einer Vertikalschnittansicht, wobei die oberen Spannrollen mit einer Laserschweißeinrichtung versehen sind;
- Fig. 3: die zweite Spannrollenstation der Schweißvorrichtung der Fig. 1, in einer Vertikalschnittansicht, wobei die untere Spannrolle mit einer zweiten Laserschweißeinrichtung versehen ist;
- Fig. 4: einen Abschnitt zweier an ihren Stoßkanten miteinander verschweißter Bänder oder Bleche mit einer ersten von oben durchgeführten Schweißung, in Vertikalschnittansicht; und
- Fig. 5: den Abschnitt der Bänder oder Bleche der Fig. 4 mit einer von unten durchgeführten zweiten Schweißung, wiederum in Vertikalschnittansicht.

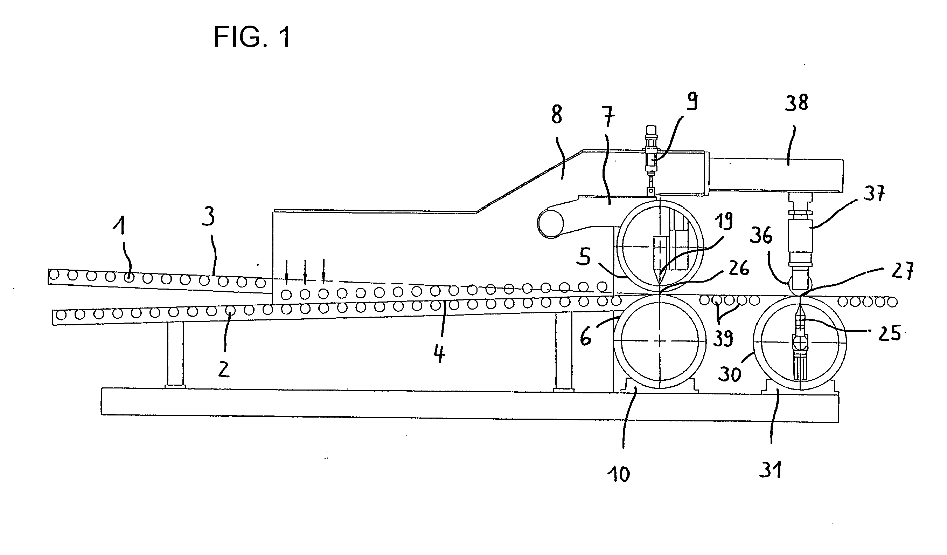

Die in Fig. 1 dargestellte Vorrichtung (Anlage) umfasst aus Rollenbahnen gebildete Führungsmittel 1, 2, mit denen zwei miteinander zu verschweißende Bleche oder Bänder 3, 4 unter spitzem Winkel derart zusammengeführt werden, dass sie im Bereich zwischen zwei Spannrollen 5, 6 mit ihren einander zugewandten Kanten auf Stoß liegen. Die obere Spannrolle 5 ist mittels einer Schwinge 7 an einem Maschinenportal 8 schwenkbar und damit höhenverstellbar gegenüber der unteren Spannrolle 6 gelagert. Zur Einstellung der Höhe der Spannrolle 5 dient ein hydraulisch betätigbarer Stellzylinder 9, der ebenfalls an dem Maschinenportal 8 angeschlagen ist.

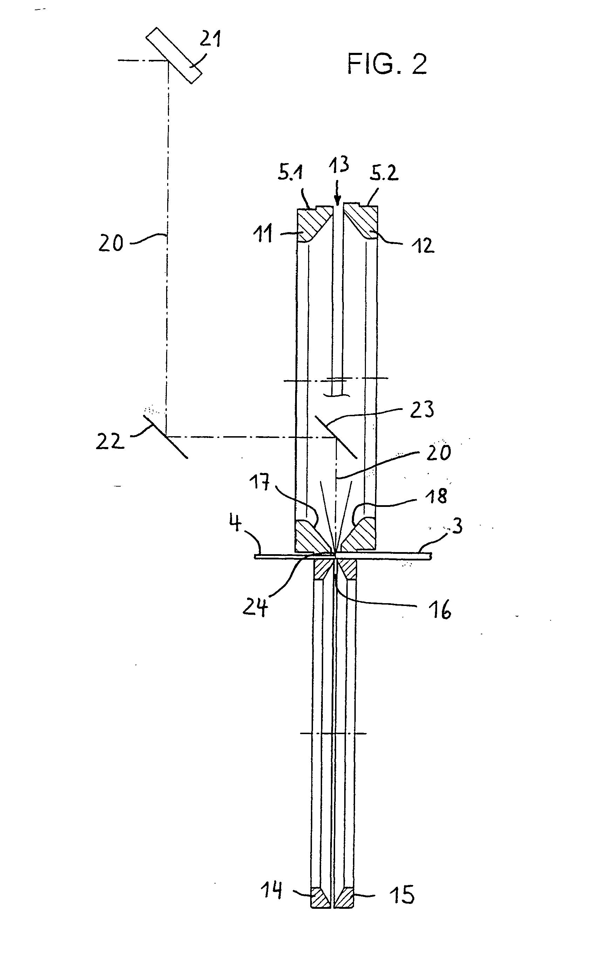

Die obere Spannrolle 5 ist frei drehbar an der Schwinge 7 gelagert, während die untere, in einem Lagerbock 10 gelagerte Spannrolle 6 vorzugsweise durch einen in der Zeichnung nicht dargestellten Antrieb angetrieben wird. Die Schwinge 7 weist zwei unabhängig voneinander schwenkbare Arme auf, die jeweils eine Hälfte 5.1, 5.2 der Spannrolle 5 tragen (vgl. Fig. 2). Dies ermöglicht die Einstellung auf unterschiedliche dicke Bleche bzw. Bänder 3, 4.

Die oberen Spannrollen 5.1, 5.2 haben jeweils eine Hohlachse (nicht gezeigt) mit einem darauf kugelgelagerten Rollenmantel 11, 12. Die Rollenmäntel 11, 12 sind mit axialem Abstand voneinander angeordnet und bilden zwischen sich einen Spalt 1-3. Die obere Hohlachse ist im Bereich des Spaltes 13 zur Bildung eines korrespondierenden Spaltes geteilt, während die untere Spannrolle (Basisrolle) 6 als Speichenradkonstruktion ausgeführt ist und mit axialem Abstand voneinander angeordnete Rollenmäntel 14, 15 aufweist. Die nicht näher dargestellte Speichenradkonstruktion der unteren Spannrolle 6 ist auf einer im Wesentlichen durchgehenden Hohlachse (nicht gezeigt) drehbar gelagert. Im oberen Bereich weist letztere eine dem Spalt 16 zwischen den unteren Rollenmänteln 14, 15 zugewandte Öffnung auf, in der eine Abführvorrichtung (nicht gezeigt) für die Abfuhr von Schweißdämpfen und/oder abgestrahlten Schweißpartikeln (Schmutzpartikeln) angeordnet ist. Ferner in der unteren Spannrolle 6 zwischen der Speichenradkonstruktion eine Zufuhrvorrichtung (nicht gezeigt) für Inertgas angeordnet.

Über die Zufuhrvorrichtung und den Spalt 16 lässt sich Inertgas zur Schweißstelle fördern.

Die Ränder 17, 18 der oberen Rollenmäntel 11, 12 sind umlaufend abgeschrägt. Diese Ausgestaltung ermöglicht ein nahes Heranrücken des Schweißkopfes 19 an die Schweißstelle. In der axial geteilten Hohlachse der oberen Spannrolle 5 ist ein Stellantrieb vorgesehen, der den Schweißkopf 19 einer Laserschweißeinrichtung in drei senkrecht zueinander verlaufenden Achsen bewegen kann. Der Laserstrahl 20 wird über eine mehrere Umlenkspiegel 21, 22, 23 aufweisende Optik in den Schweißkopf 20 geleitet, der mit einem nicht dargestellten Fokussierelement, beispielsweise einer Fokussierlinse versehen ist. Alternativ, insbesondere zur Reduzierung der Teile, kann zur Einkopplung der Energieleistung ein Lichtleiterkabel verwendet werden, das mit einem Nd-YAG-Laser verbunden ist. Zur Steuerung des Stellantriebes kann eine Messeinrichtung zur Überwachung der Schweißfuge vorgesehen sein, die beispielsweise aus einer Strahlungsquelle, insbesondere einem Laser, und einem Sensor, insbesondere einer Diodenzeilenkamera bestehen kann. Die Signale des Sensors werden einer Auswerteeinrichtung zugeführt, die die Größe und/oder Lage des Schweißspaltes (Fügestoßes) in Bezug auf Solllage und/oder Sollbreite ermittelt und bei einer Soll-/Istwertabweichung Steuerimpulse an den Stellantrieb gibt, der entsprechend den Schweißkopf 19 nachführt. Die konische Erweiterung 17, 18 des Innenumfangs der oberen Rollenmäntel 11, 12 zu ihren einander zugewandten, den Spalt 13 begrenzenden Seiten hin ermöglicht eine schräge Ausrichtung des Laserstrahls 20 auf den Fügestoß ohne dass der Laserstrahl 20 durch einen der Rollenmäntel 11, 12 behindert wird. Eine schräge Ausrichtung des Laserstrahls 20 ist beim Verschweißen von unterschiedlichen dicken Bändern üblich. Beim Verschweißen gleich dicker Bleche oder Bänder wird der Laserstrahl 20 dagegen üblicherweise senkrecht auf den Fügestoß 24 gerichtet.

Die in Fig. 1 dargestellte Schweißvorrichtung ist ferner mit einem zweiten Schweißkopf 25 versehen, der auf der Unterseite der Bänder 3, 4 und in Laufrichtung der Bänder 3, 4 versetzt zum ersten Schweißkopf 19 angeordnet ist. Die beiden Schweißköpfe 19, 25 sind so zueinander angeordnet sind, dass die Auftreffstellen 26, 27 ihrer Laserstrahlen 20, 28 auf die zu verschweißenden Band- bzw. Längskanten beispielsweise um ca. 800 mm bis 1200 mm, vorzugsweise 900 mm bis 1000 mm voneinander beabstandet sind.

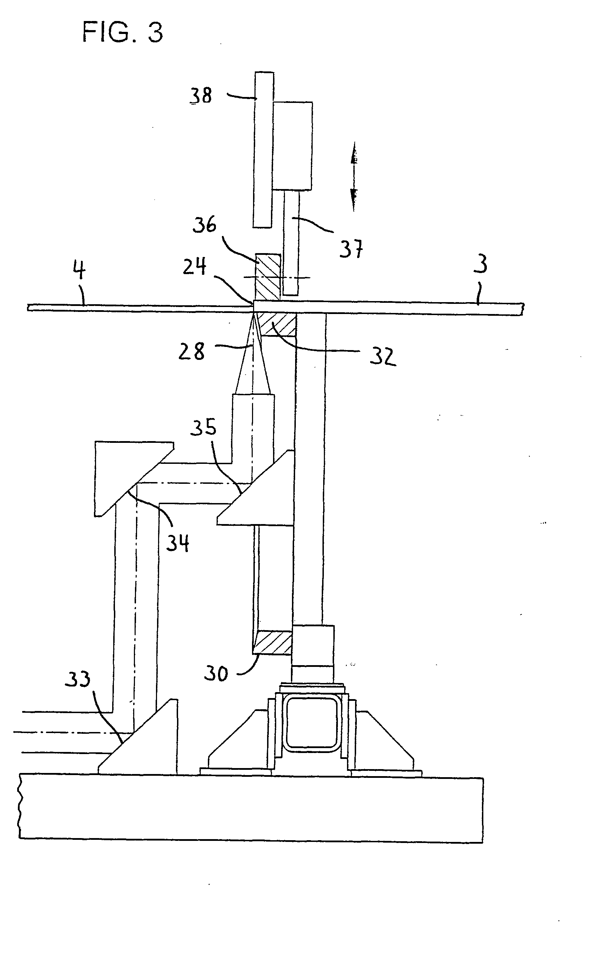

Der zweite Schweißkopf 25 ist in einer in Laufrichtung der Bänder 3, 4 nachfolgenden Spannrolle 30 vorgesehen, die frei drehbar in einem ortsfesten Lagerbock 31 gelagert ist. Die Spannrolle 30 weist wiederum eine Hohlachse mit einem darauf kugelgelagerten Rollenmantel 32 auf. Die dem Laserstrahl 28 zugewandte Seite des Rollenmantels 32 ist ebenfalls konisch ausgebildet, so dass der Laserstrahl 28 ohne Behinderung durch den Rollenmantel schräg auf den Fügestoß 24 ausgerichtet werden kann, falls auf der Unterseite der zu verschweißenden Bänder 3, 4 bzw. Bleche ein Stufensprung (Dickensprung) vorhanden ist. In Fig. 3 befinden sich die Unterseiten der zu verschweißenden Bänder 3, 4 jedoch in einer Ebene, sodass der Laserstrahl 28 senkrecht auf den Fügestoß 24 bzw. die Bänder 3, 4 ausgerichtet ist. Der von einem nicht dargestellten Resonator erzeugte Laserstrahl 28 wird über Umlenkspiegel 33, 34, 35 und eine nicht näher dargestellte Fokussiereinrichtung, beispielsweise eine Fokussierlinse, auf den Fügestoß 24 geleitet. Alternativ kann auch ein Lichtleiterkabel verwendet werden, um die Teilezahl zu reduzieren.

Der Spannrolle 30 ist eine obere Spannrolle 36 zugeordnet, die einen deutlich kleineren Außendurchmesser als die untere Spannrolle 30 aufweist und frei drehbar an einem hydraulisch betätigbaren Stellzylinder 37 gelagert ist, der an einem Ausleger 38 angeschlagen ist, der wiederum an dem Maschinenportal 8 montiert ist. Die Höhe der oberen Spannrolle 36 kann somit in Abhängigkeit der Dicke des einzuspannenden Bandes 3 eingestellt werden.

Benachbart zu den Spannrollen 5, 6 sind Antriebsrollen 39 zur Förderung der zu verschweißenden Bänder 3, 4 angeordnet. Die Antriebsrollen 39 sind in mindestens einem brückenartig ausgebildeten Rollenträger (nicht gezeigt) gelagert. Der Rollenträger ist beweglich gelagert und mit einem nicht dargestellten Antrieb versehen, mittels dem er parallel zu den Drehachsen der Spannrollen 5, 6, 30, 36 verfahren werden kann. Dem Rollenträger ist ein (nicht dargestellter) Sensor (Nahtfolgesensor) zur Erfassung der Lage der zu verschweißenden Band- bzw. Längskanten zugeordnet. Das Sensorsignal wird an eine (nicht dargestellte) Auswerteeinheit bzw. Steuerung gegeben, die in Abhängigkeit der erfassten Lage der Band- bzw. Längskanten den Antrieb des-Rollenträgers steuert. Werden mit der erfindungsgemäßen Vorrichtung Bänder 3, 4 mit unterschiedlichen Dicken verschweißt, so wird als Nahtfolgesensor vorzugsweise ein taktiler Sensor verwendet. Alternativ kann das Signal des Nahtfolgesersors zur Regelung des Laserstrahls 28 verwendet werden. Diese Ausführung kann dann zum Einsatz kommen, wenn der Platzbedarf zwischen den Schweißköpfen 19, 25 bzw. den Auftreffstellen 26, 27 der Energiestrahlen 20, 28 gering ist. Eine entsprechende Ausführung ist jedoch auch bei größeren Abständen möglich.

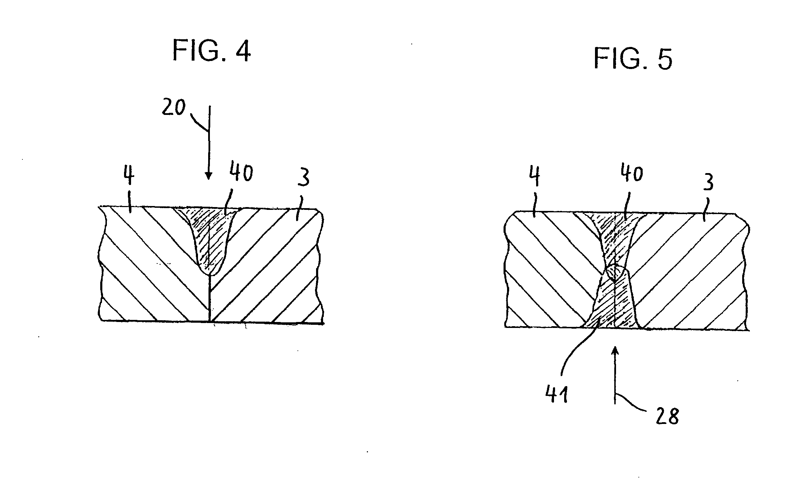

Die Figuren 4 und 5 veranschaulichen das Grundprinzip des erfindungsgemäßen sequentiellen Schweißverfahrens. Mit dem ersten Schweißkopf 19 wird am Fügestoß 24 von oben ein erster Schmelzbad- bzw. Schweißnahtbereich 40 erzeugt. Die Eindringtiefe des Schmelzbadbereiches 40 beträgt ca. 60% der Dicke des Bleches bzw. Bandes 3, 4, wobei sich beim Verschweißen von unterschiedlich dicken Blechen oder Bändern 3, 4 die anteilige Eindringtiefe an der Dicke des dünneren Bleches/Bandes orientiert. Zeitlich versetzt zu der ersten Schweißung der Bänder/Bleche 3, 4 erfolgt dann die zweite Schweißung an der Unterseite der Bänder/Bleche 3, 4. Die Eindringtiefe des zweiten bzw. unteren Schmelzbadbereiches 41 wird so gewählt, dass sie in den ersten Schweißnahtbereich 40 eindringt. Durch diese beidseitige Schweißung ist ein Durchschweißen des Fügestoßes 24 nicht mehr erforderlich. Dadurch kann der Verlust von Laserleistung verringert werden. Insbesondere ermöglicht die erfindungsgemäße zeitlich versetzte Schweißung eine Reduzierung des Energieeintrages. Die Reduzierung des Energieeintrages wirkt sich positiv auf die zu verbindenden Bänder bzw. Bleche 3, 4 aus, da hierdurch die Wärmeeinflusszone begrenzt werden kann. Dies wiederum wirkt sich günstig auf die mechanischen Eigenschaften der so verschweißten Bänder bzw. Blechen 3, 4 aus.

## Patentansprüche

1. Vorrichtung zum kontinuierlichen Verschweißen von auf Stoß geführten Bändern bzw. Blechen (3, 4) an deren Stoßkanten mit mindestens zwei Schweißköpfen (19, 25), insbesondere Laserschweißköpfen, und auf beiden Seiten der zu verschweißenden Bänder bzw. Bleche paarweise senkrecht zu deren Laufrichtung angeordneten Spannrollen (5.1, 5.2, 6), die im Bereich des Stoßes (24) der Bänder bzw. Bleche einen Spalt (13) bilden, durch den ein von einem ersten (19) der mindestens zwei Schweißköpfe ausgehender Energiestrahl (20) auf die zu verschweißenden Band- bzw. Längskanten trifft, wobei ein zweiter (25) der mindestens zwei Schweißköpfe auf der gegenüberliegenden Seite der Bänder bzw. Bleche (3, 4) angeordnet ist, dessen Energiestrahl (28) dort auf die zu verschweißenden Band- bzw. Längskanten trifft, und wobei der erste (19) der mindestens zwei Schweißköpfe in einer (5) der auf beiden Seiten der Bänder bzw. Bleche (3, 4) angeordneten Spannrollen vorgesehen ist, **dadurch gekennzeichnet, dass** die mindestens zwei Schweißköpfe (19, 25) in Laufrichtung der Bänder bzw. Bleche (3, 4) versetzt zueinander angeordnet sind, so dass die Auftreffstellen (26, 27) der Energiestrahlen (20, 28) auf die zu verschweißenden Band- bzw. Längskanten voneinander mindestens um das Maß des halben Außendurchmessers der dem ersten Energiestrahl (20) zugewandten Spannrolle (6) beabstandet sind, wobei der zweite (25) der mindestens zwei Schweißköpfe in einer in Laufrichtung der Bänder bzw. Bleche (3, 4) nachfolgenden Spannrolle (30) vorgesehen ist.

2. Vorrichtung nach Anspruch 1, **dadurch gekennzeichnet, dass** die mindestens zwei Schweißköpfe (19, 25) so angeordnet sind, dass die Auftreffstellen (26, 27) ihrer Energiestrahlen (20, 28) auf die zu verschweißenden Band- bzw. Längskanten um einen Betrag im Bereich von 15 cm bis 200 cm, vorzugsweise im Bereich von 50 cm bis 120 cm voneinander beabstandet sind.

3. Vorrichtung nach Anspruch 1 oder 2, **dadurch gekennzeichnet, dass** die an der Unterseite der Bänder bzw. Bleche (3, 4) angreifende Spannrolle (6) als Speichenradkonstruktion ausgeführt ist und mit axialem Abstand voneinander angeordnete Rollenmäntel (14, 15) aufweist.

4. Vorrichtung nach einem der Ansprüche 1 bis 3, **dadurch gekennzeichnet, dass** benachbart zu den Spannrollen (5, 6) Rollenträger mit Antriebsrollen (39) zur Förderung der zu verschweißenden Bänder bzw. Bleche (3, 4) angeordnet sind.

5. Vorrichtung nach Anspruch 4, **dadurch gekennzeichnet, dass** die Rollenträger beweglich gelagert und mit mindestens einem Antrieb versehen sind, mittels dem die Rollenträger parallel zu den Drehachsen der Spannrollen (5, 6) verfahrbar sind.

6. Vorrichtung nach Anspruch 5, **gekennzeichnet durch** mindestens einen an einer Steuerung angeschlossenen Sensor zur Erfassung der Lage der zu verschweißenden Band- bzw. Längskanten, wobei die Steuerung in Abhängigkeit der von dem mindestens einen Sensor erfassten Lage der Band- bzw. Längskanten den mindestens einen Antrieb der Rollenträger steuert oder den Laserstrahl (28) regelt.

7. Verfahren zum kontinuierlichen Verschweißen von auf Stoß geführten Bändern bzw. Blechen (3, 4) an deren Stoßkanten mittels mindestens zweier Schweißköpfe (19, 25), insbesondere Laserschweißköpfe, und auf beiden Seiten der zu verschweißenden Bänder bzw. Bleche paarweise senkrecht zu deren Laufrichtung angeordneter Spannrollen (5.1, 5.2, 6), die im Bereich des Stoßes (24) der Bänder bzw. Bleche einen Spalt (13) bilden, durch den ein von einem ersten (19) der mindestens zwei Schweißköpfe ausgehender Energiestrahl (20) auf die zu verschweißenden Band- bzw. Längskanten trifft, wobei ein zweiter (25) der mindestens zwei Schweißköpfe auf der gegenüberliegenden Seite der Bänder bzw. Bleche (3, 4) angeordnet ist, dessen Energiestrahl (28) dort auf die zu verschweißenden Band- bzw. Längskanten trifft, und wobei der erste (19) der mindestens zwei Schweißköpfe in einer (5) der auf beiden Seiten der Bänder bzw. Bleche (3, 4) angeordneten Spannrollen vorgesehen ist, **dadurch gekennzeichnet, dass** die mindestens zwei Schweißköpfe (19, 25) in Laufrichtung der Bänder bzw. Bleche (3, 4) versetzt zueinander angeordnet werden, so dass die Auftreffstellen (26, 27) der Energiestrahlen (20, 28) auf die zu,verschweißenden Band- bzw. Längskanten voneinander mindestens um das Maß des halben Außendurchmessers der dem ersten Energiestrahl (20) zugewandten Spannrolle (6) beabstandet sind, und dass die Energiestrahlleistungen der mindestens zwei Schweißköpfe (19, 25) so eingestellt werden, dass sich die durch den jeweiligen Energiestrahl erzeugte Schmelzbadeindringtiefe nicht über eine Teildicke der zu verschweißenden Bänder bzw. Bleche (3, 4) oder, bei Bändern bzw. Blechen (3, 4) mit unterschiedlichen Dicken, nicht über eine Teildicke des dünneren (4) der zu verschweißenden Bänder bzw. Bleche hinaus erstreckt, wobei der zweite (25) der mindestens zwei Schweißköpfe in einer in Laufrichtung der Bänder bzw. Bleche (3, 4) nachfolgenden Spannrolle (30) vorgesehen ist.

8. Verfahren nach Anspruch 7, **dadurch gekennzeichnet, dass** die Energiestrahlleistungen der Schweißköpfe (19, 25) so eingestellt werden, dass der mit dem zweiten Schweißkopf (25) erzeugte Schmelzbadbereich (41) in den mit dem ersten Schweißkopf (19) erzeugten Schweißnahtbereich (40) eindringt.

9. Verfahren nach Anspruch 7 oder 8, **dadurch gekennzeichnet, dass** die mindestens zwei Schweißköpfe (19, 25) in Abhängigkeit des Werkstoffes, der Dicke und/oder der Vorschubgeschwindigkeit der zu verschweißenden Bänder bzw. Bleche (3, 4) mit unterschiedlicher Energiestrahlleistung betrieben werden, so dass sich an den beiden Seiten der zu verschweißenden Bänder bzw. Bleche (3, 4) unterschiedliche Eindringtiefen der Schmelzbadbereiche (40, 41) ergeben.

10. Verfahren nach einem der Ansprüche 7 bis 9, **dadurch gekennzeichnet, dass** mit dem ersten Schweißkopf (19) und dem mindestens einen zweiten Schweißkopf (25) Schmelzbadeindringtiefen erzeugt werden, die sich um mindestens 10%, vorzugsweise mindestens 20% überlappen, wobei vorzugsweise an beiden Auftreffstellen (26, 27) der Energiestrahlen die gleiche Energieleistung eingetragen wird.

## Claims

1. A device for continuously welding strips or sheets (3, 4) guided by abutment at their abutting edges, having at least two welding heads (19, 25), in particular laser welding heads, and tensioning rollers (5.1, 5.2, 6) disposed on both sides of the strips or sheets (3, 4) to be welded perpendicular in pairs to their direction of movement, which form a gap (13) in the region of the abutment (24) of the strips or sheets (3, 4), through which an energy beam (20) emitted by a first (19) of the at least two welding heads impinges on the strip- or longitudinal edges to be welded, wherein a second (25) of the at least two welding heads is disposed on the opposite side of the strips or sheets (3, 4), the energy beam (28) of which impinges on said opposite side on the strip- or longitudinal edges to be welded, and wherein the first (19) of at least two welding heads is provided in one (5) of the tensioning rollers disposed on both sides of the strips or sheets (3, 4), **characterized in that** the at least two welding heads (19, 25) are disposed offset to one another in the direction of movement of the strips or sheets (3, 4), so that the impinging points (26, 27) of the energy beams (20, 28) on the strip- or longitudinal edges to be welded are spaced apart from each other by at least half of the outer diameter of the tensioning roller (6) facing the first energy beam (20), wherein the second (25) of the at least two welding heads is provided in a tensioning roller (30) downstream in the direction of movement of the strips or sheets (3, 4).

2. A device according to claim 1, **characterized in that** the at least two welding heads (19, 25) are disposed such that the impinging points (26, 27) of their energy beams (20, 28) on the strip- or longitudinal edges are spaced apart from each other by a distance in the range of 15 cm to 200 cm, preferably in the range of 50 cm to 120 cm.

3. A device according to claim 1 or 2, **characterized in that** the tensioning roller (6) engaging on the bottom side of the strips or sheets (3, 4) is designed as a spoke-wheel construction and has roller casings (14, 15) disposed at an axial distance from each other.

4. A device according to one of claim 1 to 3, **characterized in that** adjacent to the tensioning rollers (5, 6) roller carriers with drive rolls (39) are disposed for transport of the strips or sheets (3, 4) to be welded.

5. A device according to claim 4, **characterized in that** the roller carriers are movably mounted and are provided with at least one drive, by means of which the roller carriers are movable parallel to the axis of rotation of the tensioning rollers (5, 6).

6. A device according to claim 5, **characterized in that** at least one sensor connected to a control for the detection of the location of the strip- or longitudinal edges to be welded, wherein the control depending on the location of the strip- or longitudinal edges detected by the at least one sensor controls the at least one drive of the roller carrier or regulates the laser beam (28).

7. A method for continuously welding strips or sheets (3, 4) guided by abutment at their abutting edges, by means of at least two welding heads (19, 25), in particular laser welding heads, and tensioning rollers (5.1, 5.2, 6) disposed on both sides of the strips or sheets to be welded perpendicular in pairs to their direction of movement, which form a gap (13) in the region of the abutment (24) of the strips or sheets (3, 4), through which an energy beam (20) emitted by a first (19) of the at least two welding heads impinges on the strip- or longitudinal edges to be welded, wherein a second (25) of the at least two welding heads is disposed on the opposite side of the strips or sheets (3, 4), the energy beam (28) of which impinges on said opposite side on the strip- or longitudinal edges to be welded, and wherein the first (19) of at least two welding heads is provided in one (5) of the tensioning rollers disposed on both sides of the strips or sheets (3, 4), **characterized in that** the at least two welding heads (19, 25) are disposed offset to one another in the direction of movement of the strips or sheets (3, 4), so that the impinging points (26, 27) of the energy beams (20, 28) on the strip- or longitudinal edges to be welded are spaced apart from each other by at least half of the outer diameter of the tensioning roller (6) facing the first energy beam (20), and that the energy beam power of the at least two welding heads (19, 25) is adjusted such that the molten bath penetration depth generated by the respective energy beam does not extend beyond a partial thickness of the strips or sheets (3, 4) to be welded or, in the case of strips or sheets (3, 4) having different thicknesses, does not extend beyond a partial thickness of the thinner (4) of the strips or sheets to be welded, wherein the second (25) of the at least two welding heads is provided in a tensioning roller (30) downstream in the direction of movement of the strips or sheets (3, 4).

8. A method according to claim 7, **characterized in that** the energy beam power of the welding heads (19, 25) is adjusted such that the molten bath area (41) generated with the second welding head (25) penetrates into the welding seam area (40) generated with the first welding head (19).

9. A method according to claim 7 or 8, **characterized in that** the at least two welding heads (19, 25) depending on the material, the thickness and/or the feed rate of the strips or sheets (3, 4) to be welded are operated with different energy beam power, so that different penetration depths of the molten bath areas (40, 41) result on the two sides of the strips or sheets (3, 4) to be welded.

10. A method according to one of claims 7 to 9, **characterized in that** with the first welding head (19) and the at least one second welding head (25) molten bath penetration depths are generated, which overlap by at least 10%, preferably at least 20%, wherein preferably the same energy power is entered at both impinging points (26, 27) of the energy beams.

## Revendications

1. Dispositif pour le soudage continu de bandes ou tôles (3, 4), guidées bord à bord, au niveau de leurs bords, comportant au moins deux têtes de soudage (19, 25), en particulier des têtes de soudage à laser, et des rouleaux de tension (5.1, 5.2, 6) qui sont disposés par paires de part et d'autre des bandes ou tôles à souder, perpendiculairement au sens de défilement de celles-ci et qui, dans la zone du joint (24) des bandes ou tôles, forment une fente (13), à travers laquelle un rayon énergétique (20), issu d'une première (19) desdites au moins deux têtes de soudage, est projeté sur les bords de bande ou bords longitudinaux à souder, une deuxième (25) desdites au moins deux têtes de soudage étant disposée sur le côté opposé des bandes ou tôles (3, 4), le rayon énergétique (28) de celle-ci étant projeté à cet emplacement sur les bords de la bande ou les bords longitudinaux à souder, et la première (19) desdites au moins deux têtes de soudage étant prévue dans l'un (5) des rouleaux de tension disposés de part et d'autre des bandes ou tôles (3, 4), **caractérisé en ce que** lesdites au moins deux têtes de soudage (19, 25) sont disposées en étant décalées l'une par rapport à l'autre dans le sens de défilement des bandes ou tôles (3, 4), de telle sorte que les zones d'impact (26, 27) des rayons énergétiques (20, 28) sur les bords de bande ou bords longitudinaux à souder sont espacées l'une de l'autre selon au moins une distance correspondant à la moitié du diamètre extérieur du rouleau de tension (6) orienté vers le premier rayon énergétique (20), la deuxième (25) desdites au moins deux têtes de soudage étant prévue dans un rouleau de tension (30) consécutif dans le sens de défilement des bandes ou tôles (3, 4).

2. Dispositif selon la revendication 1, **caractérisé en ce que** lesdites au moins deux têtes de soudage (19, 25) sont disposées de telle sorte que les zones d'impact (26, 27) de leurs rayons énergétiques (20, 28) sur les bords de bande ou bords longitudinaux à souder sont écartées l'une de l'autre selon une distance dans une plage de 15 cm à 200 cm, de préférence dans une plage de 50 cm à 120 cm.

3. Dispositif selon la revendication 1 ou 2, **caractérisé en ce que** le rouleau de tension (6) en contact avec la face inférieure des bandes ou tôles (3, 4) est réalisé sous forme de roue à rayons et comporte des jupes de rouleau (14, 15) disposées à distance axiale l'une de l'autre.

4. Dispositif selon l'une quelconque des revendications 1 à 3, **caractérisé en ce que** des supports de rouleaux, munis de rouleaux d'entraînement (39) pour le convoyage des bandes ou tôles (3, 4) à souder, sont disposés au voisinage des rouleaux de tension (5, 6).

5. Dispositif selon la revendication 4, **caractérisé en ce que** les supports de rouleaux sont montés de manière mobile et sont munis d'au moins un système d'entraînement, au moyen duquel les supports de rouleaux peuvent être déplacés parallèlement aux axes de rotation des rouleaux de tension (5, 6).

6. Dispositif selon la revendication 5, **caractérisé par** au moins un capteur, raccordé à un dispositif de commande et destiné à détecter la position des bords de bande ou bords longitudinaux à souder, ledit dispositif de commande commandant ledit au moins un système d'entraînement des supports de rouleaux ou réglant le rayon laser (28) en fonction de la position des bords de bande ou bords longitudinaux détectée par ledit au moins un capteur.

7. Procédé pour le soudage continu de bandes ou tôles (3, 4), guidées bord à bord, au niveau de leurs bords, avec au moins deux têtes de soudage (19, 25), en particulier des têtes de soudage à laser, et des rouleaux de tension (5.1, 5.2, 6) qui sont disposés par paires de part et d'autre des bandes ou tôles à souder, perpendiculairement au sens de défilement de celles-ci et qui, dans la zone du joint (24) des bandes ou tôles, forment une fente (13), à travers laquelle un rayon énergétique (20), issu d'une première (19) desdites au moins deux têtes de soudage, est projeté sur les bords de bande ou bords longitudinaux à souder, une deuxième (25) desdites au moins deux têtes de soudage étant disposée sur le côté opposé des bandes ou tôles (3, 4), le rayon énergétique (28) de celle-ci étant projeté à cet emplacement sur les bords de bande ou bords longitudinaux à souder, et la première (19) desdites au moins deux têtes de soudage étant prévue dans l'un (5) des rouleaux de tension disposés de part et d'autre des bandes ou tôles (3, 4), **caractérisé en ce que** lesdites au moins deux têtes de soudage (19, 25) sont disposées en étant décalées l'une par rapport à l'autre dans le sens de défilement des bandes ou tôles (3, 4), de telle sorte que les zones d'impact (26, 27) des rayons énergétiques (20, 28) sur les bords de bande ou bords longitudinaux à souder sont écartées l'une de l'autre selon au moins une distance correspondant à la moitié du diamètre extérieur du rouleau de tension (6) orienté vers le premier rayon énergétique (20), et **en ce que** les puissances des rayons énergétiques desdites au moins deux têtes de soudage (19, 25) étant réglées de telle sorte que la profondeur de pénétration de la fusion générée par le rayon énergétique correspondant ne s'étend pas au-delà d'une épaisseur partielle des bandes ou tôles (3, 4) à souder ou, en présence de bandes ou tôles (3, 4) avec des épaisseurs différentes, ne s'étend pas au-delà d'une épaisseur partielle de la bande ou tôle la plus mince (4) des bandes ou tôles à souder, la deuxième (25) desdites au moins deux têtes de soudage étant prévue dans un rouleau de tension (30) consécutif dans le sens de défilement des bandes ou tôles (3, 4).

8. Procédé selon la revendication 7, **caractérisé en ce que** les puissances des rayons énergétiques des têtes de soudage (19, 25) sont réglées de telle sorte que la zone de fusion (41) générée par la deuxième tête de soudage (25) pénètre dans la zone de fusion (40) générée par la première tête de soudage (19).

9. Procédé selon la revendication 7 ou 8, **caractérisé en ce que** lesdites au moins deux têtes de soudage (19, 25) sont utilisées avec une puissance de rayon énergétique différente en fonction du matériau, de l'épaisseur et/ou de la vitesse d'avance des bandes ou tôles (3, 4) à souder, de telle sorte qu'il se forme des zones de fusion (40, 41) avec des profondeurs de pénétration différentes sur les deux côtés des bandes ou tôles (3, 4) à souder.

10. Procédé selon l'une quelconque des revendications 7 à 9, **caractérisé en ce qu'**au moyen de la première tête de soudage (19) et de ladite au moins une deuxième tête de soudage (25) sont générées des profondeurs de pénétration de fusion qui se chevauchent d'au moins 10 %, de préférence d'au moins 20 %, de préférence, la même puissance énergétique étant introduite au niveau des deux zones d'impact (26, 27).
